# EUROPEAN PATENT SPECIFICATION

(11) **EP 2 910 109 B1**
(45) Date of publication and mention of the grant of the patent: **09.11.2016**
(21) Application number: 15153097.9
(22) Date of filing: 29.01.2015
(51) Int. Cl.: A01G 13/00, E06B 9/24, A01G 13/02

(54) **A covering system for crops**
Schirmsystem für Gewächse
Système d'écran pour les cultures

(30) Priority: 19.02.2014 IT VI20140043
(43) Date of publication of application: 26.08.2015
(73) Proprietor: Valente S.R.L., 35011 Campodarsego (PD) (IT)
(72) Inventor: Valente, Alessandro, 35011 Campodarsego (PD) (IT)
(74) Representative: Trentin, Michele

(56) References cited:
- EP-A1- 2 371 207
- DE-A1-102007 047 630
- US-A1- 2002 129 906

## Description

### Field of application

The present invention is applicable to the field of agriculture and, in particular, it relates to the equipment for crops.

More in detail, the present invention relates to covering systems for crops.

### Prior art

In agriculture covering systems for crops, such as disclosed by EP2371207, are often needed to protect crop from atmospheric agents, from the attack of insects or other. These coverings typically comprise one or more covering elements consisting on tarpaulins, nets or the like which are placed above the crops to substantially constitute a protective roof.

In the case of crops on rows, typically one edge of the roof elements is coupled to the supports of a row in correspondence to the top of the same, while the opposite edge is supported by intermediate ropes connecting two adjacent rows or it is directly supported by the adjacent row.

These covering systems, however, constitute an obstacle to the normal rainfall on the ground as well as to the proper insolation of crops and therefore they should be unfolded only when necessary. In other words, during the use such covers are repetitively rearranged between an open position, unfolded to cover the crops, and a folded position.

According to the prior art, the above steps are performed manually by operators, but it is obvious that they are expensive in terms of time and human energy especially in the case of particularly extended crops. For this reason, they are basically let unfolded with a damage for the crops.

Then they are known covering systems in which the folding and unfolding operations are automated. These covering systems are made of a plurality of laces or ropes arranged parallel to one another and each of these extends from the top of the covering system to the opposite end. These ropes are typically coupled to a further rope that extends on the top and whose traction causes the collection of laces which, in turn, collect and fold the cover element.

The above mentioned covering systems, while allowing the folding and unfolding of the same, have a first drawback consisting in that the assembly is complicated and, therefore, it requests a long time and it is expensive. In particular, it is necessary at first to arrange a rope on the top of the cover system and subsequently to arrange all the transverse ropes each of which must be coupled to the top rope.

Another drawback is the fact that even if only one rope has transverse dimensions not identical to the other or it is poorly coupled to the top rope, the perfect folding of the cover is compromised and there is a high risk of damaging the crops below.

A further drawback is that the damage of one of the used ropes needs its replacement which is therefore expensive both in terms of material and manpower.

Another drawback is that the folding lets the cover element bulge between the laces with the risk of damaging the crops below.

### Presentation of the invention

Object of the present invention is to at least partially overcome the drawbacks mentioned above by providing a covering system for crops that is at least automatically foldable and whose installation is easier, faster and less expensive than the equivalent ones of the prior art.

Another object of the present invention is to provide a cover system for crops whose functionality does not depend on the perfect implementation of the ropes forming it with particular reference to their length.

A further object of the invention is that the covering system is easy to maintain with respect to what happens in the prior art in case of damage of the ropes.

Another object is that the covering system of the invention allows a greater protection of the crops during the folding and unfolding operations.

These objects, and others which will appear more clearly hereinafter, are fulfilled by a covering system for crops according to one or more of the following claims which are an integral part of the present application.

In particular, the covering system comprises at least one covering element coupled to a row and capable of being arranged in a first unfolded position to cover the crops below, and in a second folded position. In this latter position, at least one first band of the covering element, which extends substantially along the longitudinal axis of the same covering element, and at least one second band, which extends substantially parallel to the first band, are closer to one another to collect in a limited space the intermediate portion of the covering element.

According to an aspect of the invention, the covering system comprises a substantially filiform element arranged in a line that alternately connects a plurality of first portions of the first band with a plurality of second portions of the second band. In this way, the traction of at least one end of the filiform element causes the approach of the second band to the first band so as to collect between them the intermediate portion of the covering element therefore obtaining the folding.

In other words, the filiform element substantially identifies a zigzag direction between the two bands which is why the simple traction of the same filiform element reaches the folding of the covering element.

Advantageously, therefore, the implementation of the covering system according to the invention is simple and less expensive than in the prior art. Furthermore, since the folding is achieved by acting on a filiform element, i.e. to a rope, the maintenance in case of damage or break is particularly simple. In fact, in this case it is not necessary to replace anything, but simply to join together the portions at the sides of the damaged part of the filiform element.

Still advantageously, the goodness of the folding of the covering element does not depend on the accurate production of a plurality of components as occurs in the prior art. In the case of the invention, in fact, the important aspect is that the filiform element is long enough to cover the zigzag path.

It is also noted, advantageously, that the zigzag path of the filiform element allows the latter to better fold the covering element avoiding, or at least limiting with respect to the equivalent covering systems of the prior art, any bulging of the covering element when folded.

### Brief description of the drawings

Further features and advantages of the invention will appear more evident upon reading the detailed description of some preferred, not-exclusive embodiments of a covering system for crops according to the invention, which are described as non limiting examples with the help of the annexed drawings, in which:
FIG. 1 represents a covering system for crops according to the invention in a perspective view;
FIGS.from 2a to 2d represent some operative steps of the covering system of FIG. 1;
FIG. 3 represents a particular of the covering system of FIG. 1;
FIG. 4 represents another view of the covering system of FIG. 1;
FIG. 5 represents another embodiment of the covering system of the invention.

### Detailed description of some preferred embodiments

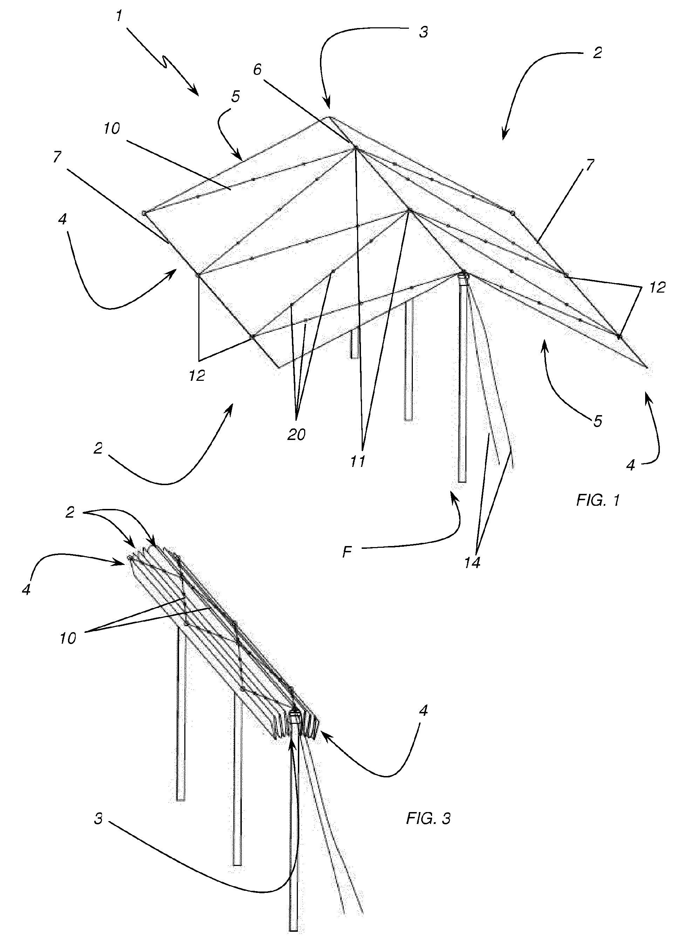

With reference to the figures, and in particular to fig. 1, it is described a covering system 1 for crops.

In particular it is noted that it comprises a pair of covering elements 2 coupled to a row F.

In the example of embodiment described the covering elements 2 are constituted by hail nets, but this must not be understood as a limitation for different embodiments where the covering elements are constituted by tarpaulins or other.

Also the number of covering elements, which are two in the figures, one on the right and one on the left of the row, and the fact that they are coupled to a row are not limiting characteristics for the invention.

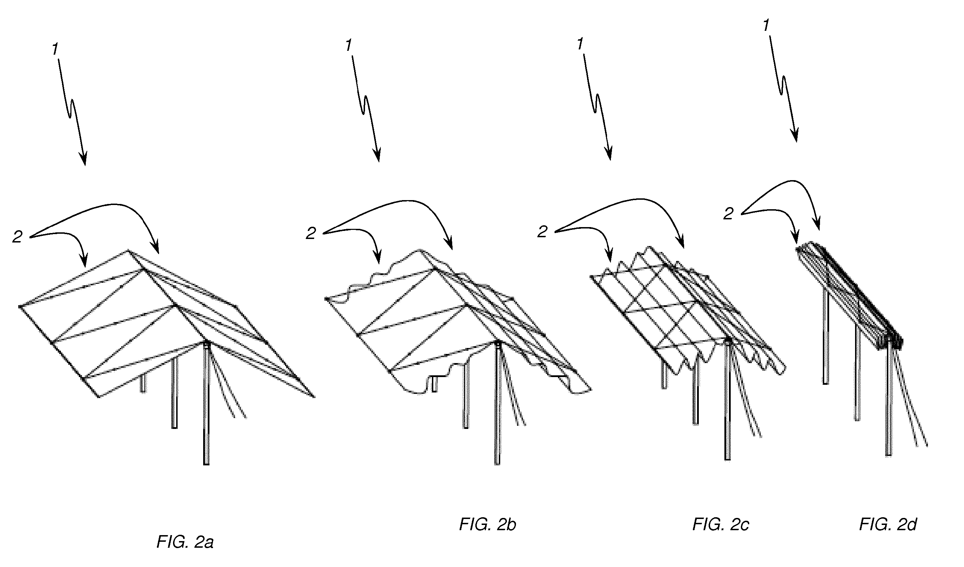

As it can be observed in the sequence of figs. from 2a to 2d, the covering elements **2** can be arranged between a first unfolded position, shown in particular in fig. 2a, to cover the crops below, and a second folded position, visible in fig. 2d. In the latter position, as it is also observed in the detail of fig. 3, a first band **3** of each covering element **2,** which extends substantially along the longitudinal axis of the same covering element **2,** and a second band **4,** which extends substantially parallel to the first band **3,** are approached to one another to fold in a limited space the intermediate portion **5** between these two bands **3, 4** of the covering element **2.**

In particular, in the figures it can be observed that for each covering element **2,** the first band **3** is constituted by the top of the covering system **1,** i.e., by a first end **6** of the covering element **2** coupled to the top of the row, while the second band **4** is constituted by a second end **7** opposite the first **6.** Obviously, this aspect of the invention is to be understood as not limiting for the invention, the first and the second band could be located in innermost positions of the covering element.

According to an aspect of the invention, the covering system **1** comprises a substantially filiform element **10** for each covering element **2.** The filiform element **10,** moreover, can be constituted by a single rope or by a plurality of ropes joined together in series by means of joining means. Also the number of filiform elements for each covering element is a not limitative feature for the invention.

In any case, such filiform element **10** is arranged according to a line alternately connecting a plurality of first portions **11** of the first band **3** with a plurality of second portions **12** of the second band **4.** In other words, as it can be seen in the figures, the filiform element **10** is arranged in a zigzag path between the two bands **3, 4** coupling them.

In this way, it is evident that the traction of one end **14** of the filiform element **10** causes the approach, as represented in the sequence of figs. from 2a to 2d, of the second band **4,** driven by the traction transmitted to the second portions **12,** to the first band **3** so as to collect between them the intermediate portion **5** of the covering element **2.**

Advantageously, as said, the implementation of the covering system **1** of the invention is simpler and less expensive then the equivalent systems of the prior art. In fact, with the known covering systems one must proceed by arranging a top rope and connecting to it a plurality of ropes absolutely identical to each other with particular reference to their length. These ropes are then coupled to the opposite end of the cover element. In the case of the invention, by contrast, a single filiform element **10** is arranged with a zigzag path connecting the first band **3** to the second band **4** on several points.

Also the maintenance in case of damages or breaks is particularly simple if compared to what happens in the known art. In the case of the invention, in fact, a damage to a portion of the filiform element **10** is simply repaired by cutting the damaged part and joining the two cut ends. In case of break, the repair is even simpler requiring only the junction of the ends of the broken portion of the filiform element **10.** Advantageously, therefore, in the case of the invention it is not necessary to replace any rope.

Still advantageously, the validity of the folding of the covering elements **2** does not depend on the correct implementation of a plurality of ropes as occurs in the known art. In the case of the invention, in fact, the only important aspect is that the filiform element **10** is long enough to cover all the zigzag path that must be done and it protrudes to at least one of the two ends to allow the traction operations.

From an operational point of view, however, the arrangement in a zigzag path of the filiform element **10** allows the latter to fold more completely the covering element **2** avoiding, or at least limiting with respect to the known covering systems, any bulging.

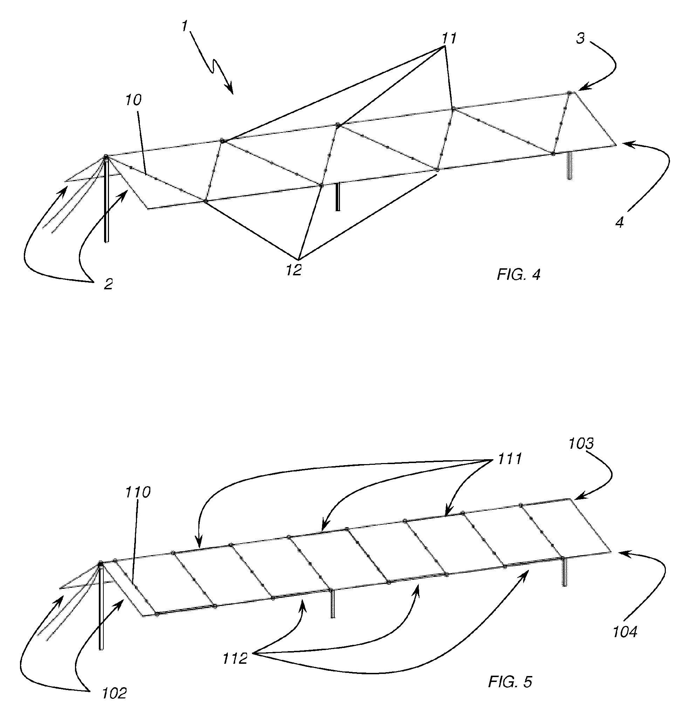

In the figures, and in particular in fig. 4, it can be seen that the first portions **11** and the second portions **12** are constituted of individual points, respectively, of the first band **3** and of the second band **4.** In other words, the filiform element **10** is arranged as a sawtooth. This embodiment, however, should not be considered limiting for other embodiments of the invention.

According to a possible different embodiment represented in fig. 5, in fact, the first portions **111** and the second portions **112** are constituted of sections of the filiform element **110** which extend parallel with respect to the first band **103** and the second band **104.** In this way, the arrangement in a zigzag path of the filiform element **110** moulds it as a Greek fret that facilitates the collection of the same covering element **102** limiting even more bulging without the need of an excessively large number of first and second portions that would make the zigzag path very dense.

In the figures it is observed that the covering elements **2,** when folded, assume an 'accordion' mould. This is due to the fact that the covering system **1** comprises anchoring elements **20** of points of the covering element **2** that are intermediate between the first band **3** and the second band **4.** The filiform element **10** is coupled to these anchoring points **20** so as to support the covering element **2.**

In light of the foregoing, it is understood that the covering system for crops according to the invention overcomes the drawbacks of the prior art allowing at least the automatic folding of the covering elements.

The installation of the covering system according to the invention is easier, faster and less expensive than the equivalent systems of the prior art. Also its maintenance is simpler and therefore less expensive.

The covering system according to the invention is susceptible to many changes and variants, all falling within the inventive concept expressed in the annexed claims. All particulars may be replaced by other technically equivalent elements, and the materials may be different according to the needs, without departing from the scope of the invention.

Even if the covering system according to the invention has been described with particular reference to the annexed figures, the numerals referred to in the disclosure and claims are only used for the sake of a better intelligibility of the invention and shall not be intended to limit the claimed scope in any manner.

## Claims

1. A crop covering system comprising at least one flexible covering element (**2**; **102**) coupleable to a row (**F**) and capable of being disposed in a first unfolded position to cover crops and in a second folded position wherein at least one first band (**3; 103**) of said covering element (**2; 102**), which extends substantially along the longitudinal axis of said covering element (**2; 102**), and at least one second band (**4; 104**) of said covering element (**2; 102**), which extends substantially parallel to said first band (**3; 103**), are closer to one another to collect in a limited space between said first and second bands (**3, 4**; **103, 104**) the intermediate portion (**5**) of said covering element (**2; 102**), **characterized in** comprising a substantially filiform element (**10; 110**) arranged as a line that alternately connects a plurality of first portions (**11; 111**) of said first band (**3**; **103**) with a plurality of second portions (**12; 112**) of said second band (**4**; **104**), the traction of at least one end (**14**) of said filiform element (**10**; **110**) causing the approach of said second band (**4; 104**) with said second portions (**12**; **112**) to said first portions (**11**; **111**) of said first band (**3**; **103**) so as to collect between them said intermediate portion (**5**) of said covering element (**2**; **102**).

2. Covering system according to claim 1, **characterized in that** said covering element (**2**; **102**) has a first end (**6**) coupleable to the top of the row (**F**)
and a second end (**7**) opposite to said first end (**6**), said first band (**3**; **103**) being at least proximate to said first end (**6**) and said second band (**4**; **104**) being at least proximate to said second end (**7**).

3. Covering system according to claim 1 or 2, **characterized in** comprising anchoring elements (**20**) of said filiform element (**10**; **110**) to intermediate points of said covering element (**2**; **102**) located between said first band (**3**; **103**) and said second band (**4**; **104**).

4. Covering system according to any of the preceding claims, **characterized in that** said substantially filiform element (**10**; **110**) is a rope.

5. Covering system according to any of claims 1 to 3, **characterized in that** said substantially filiform element is constituted by a plurality of ropes functionally connected in series by means of connecting means.

6. Covering system according to any of the preceding claims, **characterized in that** said first portions (**11**) and said second portions (**12**) are constituted by single points respectively of said first band (**3**) and of said second band (**4**).

7. Covering system according to any of claims 1 to 5, **characterized in that** said first portions (**111**) and said second portions (**112**) are constituted by sections of said filiform element (**110**) which extend parallel respectively to said first band (**103**) and said second band (**104**).

## Patentansprüche

1. Schirmsystem für Gewächse, das mindestens ein flexibles Schirmelement (2; 102) umfasst, das mit einer Reihe (F) verbunden werden kann und das in der Lage ist, in einer ersten ungefalteten Position, um Gewächse zu bedecken, und in einer zweiten gefalteten Position angeordnet zu werden, wobei mindestens ein erstes Band (3; 103) des Schirmelements (2; 102), das sich im Wesentlichen entlang der Längsachse des Schirmelements (2; 102) erstreckt, und mindestens ein zweites Band (4; 104) des Schirmelements (2; 102), das sich im Wesentlichen parallel zu dem ersten Band (3; 103) erstreckt, enger zueinander beisammen sind, um in einem begrenzten Raum zwischen den ersten und zweiten Bändern (3, 4; 103, 104) den Zwischenabschnitt (5) des Schirmelements (2; 102) zu erfassen, **dadurch gekennzeichnet, dass** es ein im Wesentlichen fadenförmiges Element (10; 110) umfasst, das als eine Linie angeordnet ist, die abwechselnd mehrere erste Abschnitte (11; 111) des ersten Bands (3; 103) mit mehreren zweiten Abschnitten (12; 112) des zweiten Bands (4; 104) verbindet, wobei der Zug des mindestens einen Endes (14) des fadenförmigen Elements (10; 110) die Annäherung des zweiten Bands (4; 104) mit den zweiten Abschnitten (12; 112) an die ersten Abschnitte (11; 111) des ersten Bands (3; 103) veranlasst, um zwischen diesen den Zwischenabschnitt (5) des Schirmelements (2; 102) zu erfassen.

2. Schirmsystem nach Anspruch 1, **dadurch gekennzeichnet, dass** das Schirmelement (2; 102) ein erstes Ende (6), das mit der Oberseite der Reihe (F) verbunden werden kann, und ein zweites Ende (7) gegenüber dem ersten Ende (6) aufweist, wobei das erste Band (3; 103) mindestens zu dem ersten Ende (6) benachbart ist und das zweite Band (4; 104) mindestens zu dem zweiten Ende (7) benachbart ist.

3. Schirmsystem nach Anspruch 1 oder 2, **dadurch gekennzeichnet, dass** es Ankerelemente (20) des fadenförmigen Elements (10; 110) zu Zwischenpunkten des Schirmelements (2; 102), die zwischen dem ersten Band (3; 103) und dem zweiten Band (4; 104) angeordnet sind, umfasst.

4. Schirmsystem nach einem der vorhergehenden Ansprüche, **dadurch gekennzeichnet, dass** das im Wesentlichen fadenförmige Element (10; 110) ein Seil ist.

5. Schirmsystem nach einem der Ansprüche 1 bis 3, **dadurch gekennzeichnet, dass** das im Wesentlichen fadenförmige Element aus mehreren Seilen, die in Reihe mittels von Verbindungsmitteln funktional verbunden sind, beschaffen ist.

6. Schirmsystem nach einem der vorhergehenden Ansprüche, **dadurch gekennzeichnet, dass** die ersten Abschnitte (11) und die zweiten Abschnitte (12) aus einzelnen Punkten jeweils des ersten Bands (3) bzw. des zweiten Bands (4) beschaffen sind.

7. Schirmsystem nach einem der Ansprüche 1 bis 5, **dadurch gekennzeichnet, dass** die ersten Abschnitte (111) und die zweiten Abschnitte (112) aus Abschnitten des fadenförmigen Elements (110) beschaffen sind, die sich parallel jeweils zu dem ersten Band (103) und dem zweiten Band (104) erstrecken.

## Revendications

1. Système de recouvrement de cultures comprenant au moins un élément de recouvrement flexible (2 ; 102) pouvant être relié à une rangée (F) et pouvant être disposé dans une première position non pliée pour recouvrir des cultures et dans une seconde position pliée dans laquelle au moins une première bande (3; 103) dudit élément de recouvrement (2; 102), qui s'étend sensiblement le long de l'axe longitudinal dudit élément de recouvrement (2 ; 102), et au moins une seconde bande (4 ; 104) dudit élément de recouvrement (2 ; 102), qui s'étend de manière sensiblement parallèle à ladite première bande (3 ; 103), sont plus proches l'une de l'autre afin de rassembler dans un espace limité entre lesdites première et seconde bandes (3, 4 ; 103, 104) la partie intermédiaire (5) dudit élément de recouvrement (2 ; 102), **caractérisé en ce qu**'il comprend un élément sensiblement filiforme (10; 110) disposé comme une ligne qui relie alternativement une pluralité de premières parties (11; 111) de ladite première bande (3; 103) avec une pluralité de secondes parties (12, 112) de ladite seconde bande (4 ; 104), la traction d'au moins une extrémité (14) dudit élément filiforme (10;110) entraînant l'approche de ladite seconde bande (4; 104) avec lesdites secondes parties (12 ; 112) vers lesdites premières parties (11 ; 111) de ladite première bande (3 ; 103) de façon à rassembler entre elles ladite partie intermédiaire (5) dudit élément de recouvrement (2 ; 102).

2. Système de recouvrement selon la revendication 1, **caractérisé en ce que** ledit élément de recouvrement (2 ; 102) possède une première extrémité (6) pouvant être reliée au-dessus de la rangée (F) et une seconde extrémité (7) opposée à ladite première extrémité (6), ladite première bande (3 ; 103) étant au moins à proximité de ladite première extrémité (6) et ladite seconde bande (4 ; 104) étant au moins à proximité de ladite seconde extrémité (7).

3. Système de recouvrement selon la revendication 1 ou 2, **caractérisé en ce qu**'il comprend des éléments d'ancrage (20) dudit élément filiforme (10; 110) aux points intermédiaires dudit élément de recouvrement (2 ; 102) situés entre ladite première bande (3 ; 103) et ladite seconde bande (4 ; 104).

4. Système de recouvrement selon l'une quelconque des revendications précédentes, **caractérisé en ce que** ledit élément sensiblement filiforme (10 ; 110) est une corde.

5. Système de recouvrement selon l'une quelconque des revendications 1 à 3, **caractérisé en ce que** ledit élément sensiblement filiforme est constitué d'une pluralité de cordes reliées de manière fonctionnelle en série au moyen de moyens de liaison.

6. Système de recouvrement selon l'une quelconque des revendications précédentes, **caractérisé en ce que** lesdites premières parties (11) et lesdites secondes parties (12) sont constituées de points uniques respectivement de ladite première bande (3) et de ladite seconde bande (4).

7. Système de recouvrement selon l'une quelconque des revendications 1 à 5, **caractérisé en ce que** lesdites premières parties (111) et lesdites secondes parties (112) sont constituées de sections dudit élément filiforme (110) qui s'étendent en parallèle respectivement par rapport à ladite première bande (103) et à ladite seconde bande (104).
